# EUROPEAN PATENT SPECIFICATION

(11) **EP 0 604 436 B1**
(45) Date of publication and mention of the grant of the patent: **07.02.1996**
(21) Application number: 92914406.1
(22) Date of filing: 30.06.1992
(51) Int. Cl.: B64D 41/00, F02C 7/32

(54) **DUCTED FAN GAS TURBINE ENGINE ACCESSORY DRIVE SYSTEM**
ANTRIEBSVORRICHTUNG VON HILFSEINRICHTUNGEN FÜR EIN MANTELGEBLÄSE-GASTURBINENTRIEBWERK
SYSTEME D'ENTRAINEMENT DES ACCESSOIRES D'UN TURBOREACTEUR A SOUFFLANTE CARENEE

(30) Priority: 17.09.1991 GB 9119852
(43) Date of publication of application: 06.07.1994
(73) Proprietor: ROLLS-ROYCE plc, London, SW1E 6AT (GB)
(72) Inventor: NEWTON, Arnold Charles, Ockbrook, Derby DE7 3RF (GB)
(74) Representative: Gunn, Michael Alan
(86) International application number: GB9201179
(87) International publication number: WO9306007

(56) References cited:
- FR-A- 2 015 354
- FR-A- 2 152 362
- GB-A- 2 169 968
- US-A- 3 792 586

## Description

This invention relates to a ducted fan gas turbine engine accessory drive system for driving the accessories on the engine and the aircraft upon which the engine is operationally mounted.

In addition to providing propulsive thrust for an aircraft, the gas turbine engines mounted on that aircraft are required to provide electrical and hydraulic power for accessories. Such power is necessary both for the engine's own accessories and those of the aircraft as a whole.

The conventional way of extracting electrical and hydraulic power from a ducted fan gas turbine engine is to provide a direct mechanical drive from one of the main load transmitting shafts of the engine to suitable electrical and hydraulic power generators via a reduction gearbox. Such an arrangement is described in US-A03792586 in which the load transmitting shaft between the engine's fan and low pressure turbine drives an additional shaft which in turn drives a gearbox mounted on the outer fan frame casing of the engine. The gearbox drives various fuel and oil pumps.

FR-A-2152362 discloses a similar arrangement in which the additional shaft drives accessories which are mounted adjacent the fan casing of the engine.

The drawback in mounting engine accessories in this way is that their close proximity to the engine results in exposure to high levels of heat and vibration. This in turn has a detrimental effect upon the life and reliability of the accessories.

It is an object of the present invention to provide and aircraft power unit comprising a ducted fan gas turbine engine in which the levels of heat and vibration to which the accessories of the engine are exposed are reduced.

According to the present invention, an aircraft power unit comprises a ducted fan gas turbine engine and pylon for suspending said engine from an aircraft, said engine comprising a fan and a low pressure turbine, said low pressure turbine being adapted to drive said fan via a load transmitting shaft which interconnects them, said load transmitting shaft being additionally adapted to drive the accessories of said engine and any aircraft upon which said engine is mounted wherein an additional drive shaft drivingly interconnects the extreme downstream end of said load transmitting shaft with said accessories.

The interconnection between the extreme downstream end of the load transmitting shaft with the accessories ensures that the accessories may be conveniently placed in a region, such as within the pylon, in which they are exposed to low levels of heat and vibration. The accessories thereby have improved life and reliability characteristics.

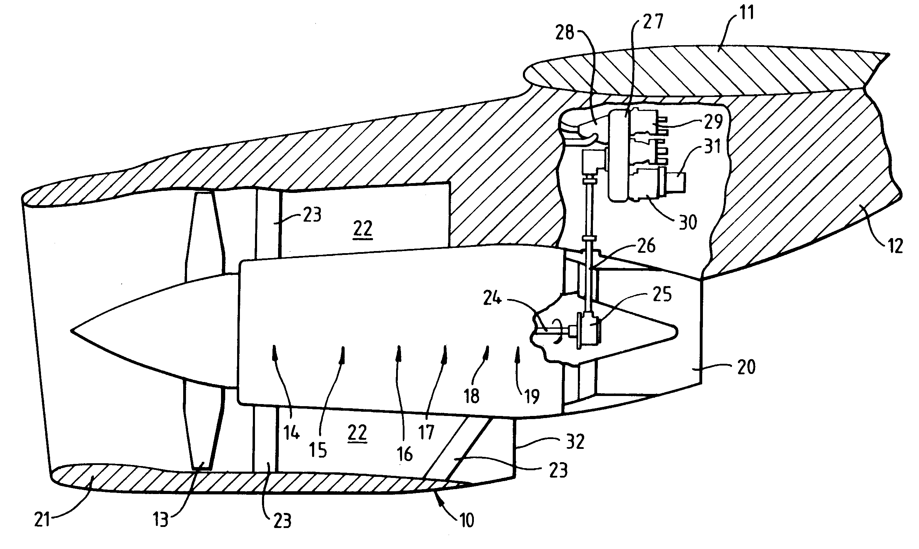

The present invention will now be described, by way of example, with reference to the accompanying drawing which is a partially sectioned side view of a ducted fan gas turbine engine in accordance with the present invention.

Referring to the drawing, a ducted fan gas turbine engine 10 is suspended from the wing 11 of an aircraft by means of a pylon 12 in the conventional manner.

The ducted fan gas turbine engine 10 is likewise of generally conventional construction. It comprises a propulsive fan 12, an intermediate pressure compressor 14, a high pressure compressor 15, combustion equipment 16, high, intermediate and low pressure turbines 17,18 and 19 respectively and a propulsive nozzle 20. The fan 13 together with a majority of the remainder of the engine 10 are enclosed by a fan casing 21. The fan casing 21 cooperates with the remainder of the engine 10 to define a substantially annular fan duct 22 which extends the length of the fan casing 21. Radial struts 23 interconnect the fan casing 21 with the remainder of the engine 10.

The ducted fan gas turbine engine 10 operates in the conventional manner. Air entering the engine 10 at the open upstream end of the fan casing 21 is compressed by the rotation of the fan 13. The majority of the air compressed by the fan 13 flows through the fan duct 22 before finally being exhausted through the downstream end 32 of the fan duct 22 to provide propulsive thrust.

The remainder of the air compressed by the rotation of the fan 13 is directed into the intermediate pressure compressor 14. There the air is compressed further before it is directed into the high pressure compressor 15 where still further compression takes place. The air is then directed into the combustion equipment 16 where it is mixed with fuel and the mixture combusted. The resultant combustion products then expand through, and thereby drive, the high, intermediate and low pressure turbines 17,18 and 19 respectively before exhausting through the nozzle 20 to provide additional propulsive thrust.

The high and intermediate pressure turbines 17 and 18 respectively drive the high and intermediate pressure compressors 15 and 14 by means of coaxial shaft (not shown) which extend along the longitudinal axis of the engine 10. A further shaft 24 which is coaxial with the other shafts and part of which can be seen in the drawing, interconnects the low pressure turbine 19 and the fan 13. Thus the shaft 24 transmits drive between the low pressure turbine 19 and the fan 13.

The downstream end of the shaft 24 is drivingly connected to a first gearbox 25. The first gearbox 25 has an output shaft 26 which extends perpendicularly to the low pressure turbine shaft 24 into the interior of the pylon 12 where it provides the power input to a second gearbox 27.

The second gearbox 27 has attached to it, and drives, several engine and aircraft accessories. Specifically these are the main engine fuel pump 28, a hydraulic pump 29 for powering aircraft and engine hydraulic systems, a first generator 30 for providing aircraft electrical power and a second generator 31 for providing engine electrical power.

Under normal operating conditions of the ducted fan gas turbine engine 10, the low pressure turbine shaft 24 drives the various engine and aircraft accessories 28-31 in the manner described above. However since the accessories 28-31 are mounted within the pylon 12 they are located further away from the engine 10 than is normally the case. As a consequence they are not subject to same levels of heat and vibration as conventionally mounted accessories. This in turn leads to longer life and greater reliability of the accessories.

In the event of an in-flight failure of the gas turbine engine 10, the fan 13 is allowed to windmill; that is to be rotated by the flow of ambient air over it. This in turn results in the rotation of the low pressure turbine shaft 24, consequently providing continuity of drive to the first and second gearboxes 25 and 27 and hence the accessories 28-31.

The fan 13, when windmilling, generates approximately 50 to 60 horsepower. This compares with the generation of approximately 2 to 3 horsepower by the high pressure turbine 15 as a result of its windmilling. Consequently whereas the power generated by the windmilling fan 13 is sufficient to drive the accessories 28-31 at an acceptable speed, the power generated by the high pressure turbine 15 is not.

As explained earlier, in the event of failure of a conventional ducted fan gas turbine engine in which the accessories are driven from the engine's high pressure compressor shaft, it is necessary to provide a separate ram air turbine in order to achieve the necessary accessory drive power. The high power output of the windmilling fan 13 ensures that such a separate ram air turbine is not necessary. Consequently there is a resultant weight and cost saving as a result of the use of the system of the present invention.

It will be seen therefore that in the event of an in-flight failure of the ducted fan gas turbine engine 10, windmilling of the fan 13 ensures that there is still sufficient power available to drive the accessories 28-31. Thus there is provided continuity of electrical and hydraulic power to the aircraft on which the engine 10 is mounted. Additionally power is available for the various accessories of the engine 10 if it is desired to attempt to re-start the engine 10.

## Claims

1. An aircraft power unit comprising a ducted fan gas turbine engine (10) and pylon (12) for suspending said engine (10) from an aircraft, said engine (10) comprising a fan (13) and a low pressure turbine (19), said low pressure turbine (19) being adapted to drive said fan (13) via a load transmitting shaft (24) which interconnects them, said load transmitting shaft (24) being additionally adapted to drive the accessories (28,29,30,31) of said engine (10) and of any aircraft upon which said engine (10) is mounted, wherein an additional drive shaft (26) drivingly interconnects said load transmitting shaft (24) and said accessories (28,29,30,31) characterised in that said additional drive shaft (26) drivingly interconnects the extreme downstream end of said load transmitting shaft (24) with said accessories (28,29,30,31).

2. An aircraft power unit as claimed in claim 1 characterised in that said accessories (28,29,30,31) are mounted within said pylon.

3. An aircraft power unit as claimed in claim 1 or claim 2 characterised in that said accessories (28,29,30,31) include those which provide electrical and hydraulic power to said engine (10) and any aircraft upon which said engine (10) is mounted.

## Patentansprüche

1. Antriebsvorrichtung für ein Flugzeug, welches ein Fan-Mantelstromgasturbinentriebwerk (10) und einen Pylon (12) aufweist, um das Triebwerk (10) am Flugzeug aufzuhängen, wobei das Triebwerk (10) einen Fan (13) und eine Niederdruckturbine (19) aufweist und diese Niederdruckturbine (19) den Fan (13) über eine Lastübertragungswelle (24) antreibt, die eine Verbindung dazwischen herstellt, wobei die Lastübertragungswelle (24) außerdem dazu dient, Hilfsmaschinen (28, 29, 30, 31) des Triebwerks (10) und Hilfsmaschinen des Flugzeugs anzutreiben, an dem das Triebwerk (10) montiert ist, wobei eine zusätzliche Antriebswelle (26) antriebsmäßig die Lastübertragungswelle (24) und die Hilfsvorrichtungen (28, 29, 30, 31) verbindet,
dadurch gekennzeichnet, daß die zusätzliche Antriebswelle (26) antriebsmäßig das am weitesten stromab liegende Ende der Lastübertragungswelle (24) mit den Hilfsvorrichtungen (28, 29, 30, 31) verbindet.

2. Antriebsvorrichtung für ein Flugzeug nach Anspruch 1,
dadurch gekennzeichnet, daß die Hilfsvorrichtungen (28, 29, 30, 31) innerhalb des Pylon gelagert sind.

3. Antriebsvorrichtung für ein Flugzeug nach den Ansprüchen 1 oder 2,
dadurch gekennzeichnet, daß die Hilfsvorrichtungen (28, 29, 30, 31) jene aufweisen, die elektrische und hydraulische Leistung für das Triebwerk (10) und das Flugzeug liefern, an dem das Triebwerk (10) gelagert ist.

## Revendications

1. Groupe générateur d'avion comprenant un moteur à turbine à gaz à soufflante canalisé (10) et un mât (12) pour suspendre ledit moteur (10) à un avion, ledit moteur (10) comportant une soufflante (13) et une turbine basse pression (19), ladite turbine basse pression (19) étant adaptée à entraîner ladite soufflante (13) via un arbre de transmission de charge (24) qui les relie, ledit arbre de transmission de charge (24) étant en outre adpaté à entraîner des accessoires (28, 29, 30, 31) dudit moteur (10) et de tout avion sur lequel ledit moteur (10) est monté, dans lequel un arbre d'entraînement additionnel (26) relie de manière menante ledit arbre de transmission de charge (24) et lesdits accessoires (28, 29, 30, 31), caractérisé en ce que ledit arbre d'entraînement additionnel (26) relie de manière menante l'extrémité la plus en aval dudit arbre de transmission de charge (24) avec lesdits accessoires (28, 29, 30, 31).

2. Groupe générateur d'avion selon la revendication 1, caractérisé en ce que lesdits accessoires (28, 29, 30, 31) sont montés a' l'intérieur dudit mât.

3. Groupe générateur d'avion selon la revendication 1 ou la revendication 2, caractérisé en ce que lesdits accessoires (28, 29, 30, 31) comprennent ceux qui fournissent une puissance électrique et hydraulique audit moteur (10) et à tout avion sur lequel ledit moteur (10) est monte.
